# EUROPEAN PATENT SPECIFICATION

(11) **EP 2 455 339 B1**
(45) Date of publication and mention of the grant of the patent: **04.01.2017**
(21) Application number: 10799699.3
(22) Date of filing: 18.06.2010
(51) Int. Cl.: C01F 5/08, C01F 5/02, C08K 3/22, C08L 101/00, C09D 7/12, C09D 201/00, C09K 5/14, C08K 9/02

(54) **MAGNESIUM OXIDE PARTICLES, METHOD FOR PRODUCING SAME, HEAT DISSIPATING FILLER, RESIN COMPOSITION, HEAT DISSIPATING GREASE, AND HEAT DISSIPATING COATING COMPOSITION**
MAGNESIUMOXIDPARTIKEL, HERSTELLUNGSVERFAHREN, WÄRMEABLEITENDER FÜLLSTOFF, HARZZUSAMMENSETZUNG, WÄRMEABLEITENDES SCHMIERFETT UND WÄRMEABLEITENDE BESCHICHTUNGSZUSAMMENSETZUNG
PARTICULES D'OXYDE DE MAGNÉSIUM, LEUR PROCÉDÉ DE FABRICATION, CHARGE À DISSIPATION DE CHALEUR, COMPOSITION DE RÉSINE, GRAISSE À DISSIPATION DE CHALEUR, ET COMPOSITION DE REVÊTEMENT À DISSIPATION DE CHALEUR

(30) Priority: 14.07.2009 JP 2009165303
(43) Date of publication of application: 23.05.2012
(73) Proprietor: Sakai Chemical Industry Co., Ltd., Sakai-shi, Osaka 590-8502 (JP)
(72) Inventor: NAKAGAWA, Ken-ichi, Sakai-shi Osaka 590-0985 (JP); SUZUKI, Masahiro, Sakai-shi Osaka 590-0985 (JP)
(74) Representative: Isarpatent
(86) International application number: PCT/JP2010/060337
(87) International publication number: WO 2011/007638

(56) References cited:
- EP-A1- 0 370 728
- WO-A2-2007/106209
- JP-A- 2006 225 240
- JP-A- 2006 225 240
- JP-A- 2007 070 608
- JP-A- 2007 091 525
- JP-A- 2007 091 525
- JP-A- 2008 184 366
- JP-A- 2008 184 366
- JP-A- 2009 007 192
- DATABASE INSPEC [Online] THE INSTITUTION OF ELECTRICAL ENGINEERS, STEVENAGE, GB; 1975, HAMANO K ET AL: "Effects of boron oxide on sintering of magnesia", XP002738945, Database accession no. 955470 & K. HAMANO AND Y. AKIYAMA: "Effect of boron oxide on sintering of magnesia", BULLETIN OF TOKYO INSTITUTE OF TECHNOLOGY JAPAN, no. 126, 1975, pages 59-67, ISSN: 0366-3736

## Description

### TECHNICAL FIELD

The present disclosure relates to a magnesium oxide particle, a method for producing it, a heat-conducting filler, a resin composition, a heat-conducting grease and a heat-conducting coating composition.

### BACKGROUND OF THE DISCLOSURE

Magnesium oxide is a compound which is superior in heat resistance, thermal conductivity, and electrical insulation, it being widely used in various industrial fields such as rubber accelerators, pigments for coating compositions and inks, and medicinal products. As one of various applications of this magnesium oxide, a heat-conducting filler has been proposed (see Japanese Kokai Publication 2009-7215,).

Alumina and aluminum nitride are usually used widely as the heat-conducting filler. However, alumina has a problem that kneading machines become extremely worn in the production process of heat-conducting sheets and so on, because Mohs hardness of alumina is high. Further, it is difficult to add aluminum nitride to a resin in high concentration, because of poor filling property. In addition, aluminum nitride is expensive, so heat-conducting parts made thereof are expensive. Therefore, new heat-conducting fillers which are made of other materials than such conventional materials are needed.

There is an advantage that a magnesium oxide particle has good handling property, because it is a compound having low Mohs hardness and being low-density. It is a high electrical resistance material, being suitable in the electric and electronic fields. However, when the magnesium oxide particle is used as a heat-conducting filler, it is needed to fill it in high concentration. Magnesium oxide, of which the aggregation condition and particle size distribution are controlled, is desired. In Japanese Kokai Publication 2009-7215, there is mentioned about controlling primary particle diameter, but the level of particle aggregation and particles, of which particle size distribution is controlled, are not described.

JP 2008 184366 A and EP 0 370 728 A1 describes magnesium oxide particles. WO 2007/106209 A2 describes grease including a polyorganosiloxane and at least one thermally conductive filler. None of these documents disclose magnesium oxide particles having a (median size)/(specific surface diameter obtained from specific surface area) ratio of 2.8 or less.

It is desired that a new effect, which results from physical properties different from common ones, can be achieved by using the magnesium oxide showing specific particle size distribution in the above-mentioned various applications of the magnesium oxide other than the heat-conducting filler.

### [PRIOR PATENT DOCUMENT]

### [PATENT DOCUMENT]

[PATENT DOCUMENT 1] Japanese Kokai Publication 2009-7215

### DISCLOSURE OF INVENTION

### OBJECT OF THE DISCLOSURE

The object of the present disclosure is to provide a magnesium oxide particle that can be used more suitably than common magnesium oxide in the application such as a heat-conducting filler and the like.

### PROBLEM TO BE SOLVED BY THE INVENTION

The present disclosure relates to a magnesium oxide particle having (median size)/(specific surface diameter obtained from specific surface area) ratio of 2.8 or less, D90/D10 of 4 or less, and a median size of 0.1 to 25 μm.

Further describes is that the magnesium oxide particle is preferably obtained by baking magnesium hydroxide in the presence of boric acid or a salt thereof at 1000 to 1800 °C.

Further describes is that the magnesium oxide particle is preferably obtained by mixing magnesium hydroxide and 0.1 to 10 mol parts of boric acid or a salt thereof in boron equivalent relative to 100 mol parts of the magnesium hydroxide and baking the mixture.

Further describes is that the boric acid or a salt thereof is preferably at least one compound selected from the group consisting of lithium tetraborate pentahydrate, sodium tetraborate decahydrate, potassium tetraborate tetrahydrate, and ammonium tetraborate tetrahydrate.

Further describes is that the magnesium oxide particle is preferably obtained by surface treatment.

The present disclosure relates to a method for producing a magnesium oxide particle comprising baking magnesium hydroxide in the presence of boric acid or a salt thereof at 1000 to 1800 °C to obtain the magnesium oxide particle mentioned above.

The method for producing a magnesium oxide particle comprises mixing magnesium hydroxide and 0.1 to 10 mol parts of boric acid or a salt thereof in boron equivalent relative to 100 mol parts of said magnesium hydroxide and baking the mixture.

The boric acid or a salt thereof is preferably at least one compound selected from the group consisting of lithium tetraborate pentahydrate, sodium tetraborate decahydrate, potassium tetraborate tetrahydrate, and ammonium tetraborate tetrahydrate.

The present disclosure relates to a heat-conducting filler comprising the magnesium oxide particle.

The present disclosure relates to a heat-conducting resin composition comprising the magnesium oxide particle. The present disclosure relates to a heat-conducting grease comprising the magnesium oxide particle.

The present disclosure relates to a heat-conducting coating composition comprising the magnesium oxide particle.

### EFFECT OF THE INVENTION

The magnesium oxide particle of the present disclosure can be highly-filled up in a material forming a matrix, it showing sharp particle size distribution and being controlled about the level of particle aggregation.
Therefore, it can be used as a superior heat-conducting material. Furthermore, the magnesium oxide particle can be used in the fields of rubber accelerators, pigments for coating compositions and inks, and medicinal products.

### DETAILED DESCRIPTION OF PREFERRED EMBODIMENTS

The present disclosure is described in more detail below. The magnesium oxide particle of the present disclosure has (median size)/(specific surface diameter obtained from specific surface area (hereinafter referred to as SSA diameter)) ratio of 2.8 or less, D90/D10 of 4 or less, and a median size of 0.1 to 25 μm.

When the magnesium oxide particle is used as a heat-conducting material, it is desired to increase the filling rate of the particles in a composition for good heat-conducting property. For good filling rate, it is important to control the aggregation condition and particle size distribution. The magnesium oxide particle, of which the aggregation condition and shape are controlled at high levels, is desired. The inventor has completed the present disclosure by finding the particle satisfying the above mentioned parameters to be suitable for the object.

Furthermore, it is preferred to use several magnesium oxide particles having different particle diameter on the basis that particle diameter and shape of the particles are controlled as mentioned above, because higher filling rate can be achieved and good heat-conducting property can be obtained.

The magnesium oxide particle of the present disclosure is a magnesium oxide particle of which the level of particle aggregation and particle size distribution are controlled. The (median size)/(SSA diameter) ratio is a value representing the level of particle aggregation. The median size is particle diameter which reflects the secondary particle diameter, the SSA diameter being particle diameter which reflects primary particle diameter. Therefore, the ratio is a parameter showing the number of primary particles composing the secondary particle. The magnesium oxide particle of the present disclosure has secondary particles formed by aggregating relatively few primary particles. Such particles have the advantage that they are superior in dispersibility in a resin or oil, especially they are suitable for the heat-conducting material.
The magnesium oxide particle of the present disclosure has (median size)/(SSA diameter) ratio of 2.8 or less, more preferably 2.7 or less.

The magnesium oxide particle of the present disclosure has D90/D10 of 4 or less, the particle size distribution thereof being sharp. As mentioned above, the particle having sharp particle size distribution is preferred because a filling rate is controlled easily and a composition showing high heat-conducting property can be obtained easily. The D90/D10 is more preferably 3.9 or less.

In the magnesium oxide particle of the present disclosure, a secondary particle is formed by aggregating comparatively fewer primary particles and the ratio of D90 to D10 is smaller than conventional magnesium oxide particles (that is, particle size distribution is sharp). This magnesium oxide particle is not publically known and is obtained by the inventors for the first time.

The median size is also referred to as D50. When the powder is divided by particle diameter based on the median size into two groups, a bigger group and a smaller group having equal amounts. D10 and D90 correspond to the point where the cumulative weight from the small-particle-diameter side reaches 10% and 90% in the cumulative particle size distribution. D10, D50, and D90 are values determined by measuring the particle size distribution, respectively. The particle size distribution is measured by using laser diffraction particle size distribution analyzer (Microtrac MT 3300 EX manufactured by NIKKISO CO.,LTD) according to the present disclosure.

The SSA diameter is a value determined from BET specific surface area measured by usual methods, based on the presupposition that the particle has spherical shape.

As for the magnesium oxide particle, particle diameter median size is preferably 0.1 to 25 µm, the lower limit is more preferably 1 µm. That is, the particle having the broad particle diameter as mentioned above can be used as a heat-conducting material, and it may be an arbitrarily-sized one that is needed for high filling rate.

As for the magnesium oxide particle, particle diameter thereof is not particularly limited. However, the SSA diameter thereof is preferably 0.1 to 15 µm, the lower limit is more preferably 1 µm. That is, the particle having the broad particle diameter as mentioned above can be used as a heat-conducting material, and it may be an arbitrarily-sized one that is needed for high filling rate.

The particle shape of the magnesium oxide particle of the present disclosure is not particularly limited, but includes needle shape, bar-like shape, plate-like shape, spherical shape and the like. Preferably, the particle shape is nearly spherical shape. In addition, the particle shape can be observed by Scanning Electron Microscope (JSM 840 F manufactured by JEOL Ltd.).

As for the magnesium oxide particle, particle diameter thereof is not particularly limited. However, the average primary particle diameter thereof is preferably 0.1 to 15 µm, the lower limit is more preferably 1 µm. That is, the particle having the broad particle diameter as mentioned above can be used as a heat-conducting material, and it may be an arbitrarily-sized one that is needed for high filling rate.

The primary particle diameter can be measured by the following method described in Example for detail.

The magnesium oxide particle of the present disclosure is preferably surface treated. Magnesium oxide particles tend to convert to magnesium hydroxide by contacting with water, or being exposed to humid environment. Therefore, it is preferred to be surface treated for good water resistance property.

By the surface treatment, it is preferred that hydrophobic character is improved and electrical conductivity is maintained to the low level. Thus, because magnesium oxide particle cannot maintain low electrical conductivity when a film formed by the surface treatment has high conductive property, it is preferably treated by the specific surface treatment method for use in the applications electrical/electronic industry material.

According to the above mentioned state, the surface treatment is preferably performed by using an alkoxysilane expressed by the following general formula (1).

R¹₄₋ₙSi(OR²)ₙ (1)

In the formula, R¹ is an alkyl group, phenyl group, or a fluoroalkyl group, of which a part of the hydrogen atoms is replaced with fluorine. The alkyl group or fluoroalkyl group has 1 to 10 carbon atoms. R² is an alkyl group having 1 to 3 carbon atoms. N is 2, 3, or 4.

Alkoxysilane expressed by the general formula (1) is not particularly limited but includes, for example, methyltrimethoxysilane, dimethyldimethoxysilane, phenyltrimethoxysilane, diphenyldimethoxysilane, tetraethoxysilane, methyltriethoxysilane, dimethyldiethoxysilane, phenyltriethoxysilane, n-propyltrimethoxysilane, n-propyltriethoxysilane, hexyltrimethoxysilane, hexyltriethoxysilane, decytrimethoxysilane, trifluoropropyltrimethoxysilane.

By the surface treatment, it is preferable to form a film layer of 0.1 to 20 weight % relative to the magnesium oxide particle on the surface. By applying such treatment, water resistance property and acid resistance property can be improved while maintaining low electrical conductivity.

The magnesium oxide particle of the present disclosure can be produced by baking magnesium hydroxide in the presence of boric acid or a salt thereof. This method for producing the magnesium oxide particle is one aspect of the present invention.

This production of magnesium oxide by baking in the presence of boric acid or a salt thereof is preferred because the magnesium oxide particle having the specified (median size)/(SSA diameter) ratio and D90/D10 and having the desired particle diameter as mentioned above, is easily obtained by adjusting the addition amount of boric acid or a salt thereof and the baking temperature.

More specifically, the magnesium oxide particle is obtained by the method for producing a magnesium oxide particle of the present disclosure as mentioned in more detail below.

The method for producing a magnesium oxide particle of the present disclosure is described in more detail below.

In the method for producing a magnesium oxide particle of the present disclosure, magnesium hydroxide is used as a raw material. The magnesium hydroxide preferably has an average particle diameter of 0.05 to 2 µm. The average particle diameter of the magnesium hydroxide is measured by laser diffraction particle size distribution analyzer (Microtrac MT 3300 EX manufactured by NIKKISO CO.,LTD).

The magnesium hydroxide used in the present disclosure is not particularly limited as for its origin but includes natural products obtained by pulverizing natural minerals, synthetic compounds obtained by neutralizing a water-soluble magnesium salt in water using alkaline substances and so on. Preferably, the latter, synthetic compounds are used. In the production of the synthesis compounds, the water-soluble magnesium salt includes, for example, magnesium chloride, magnesium sulfate, magnesium nitrate, and magnesium acetate. The alkaline substance includes, for example, sodium hydroxide, potassium hydroxide, and ammonia. According to the present disclosure, this alkaline substance is usually used in the range of 0.8 to 1.2 equivalents relative to 1 equivalent of magnesium salt.

In the present disclosure, for producing magnesium hydroxide by reacting a water-soluble magnesium salt with an alkaline substance in water, a slurry containing precipitation of magnesium hydroxide is obtained by reacting 1 equivalent of water-soluble magnesium salt with 0.8 to 1.2 equivalents, preferably 1.0 to 1.2 equivalents of alkaline substance. This slurry is hydrothermal treated at 120 to 200 °C under pressure and the obtained reaction mixture is usually cooled to the room temperature, filtered, and washed with water to remove by-product salts. The obtained mixture is dried and pulverized to obtain magnesium hydroxide having an average primary particle diameter of 0.1 to 2 µm, specific surface area of 1 to 30 m²/g and hexagonal plate-like shape, followed by baking to obtain a spherical magnesium oxide particle having an average primary particle diameter of 0.1 to 2 µm, usually.

The method for producing a magnesium oxide particle of the present disclosure is characterized by baking in the presence of boric acid or a salt thereof. In the production of inorganic particles, the baking in the presence of flux may be performed to increase particle diameter thereof. The inventors found that, when boric acid or a salt thereof is used as flux in this baking, the particle size distribution of the obtained magnesium oxide particles became sharper than when other compounds were used as flux.

The boric acid or a salt thereof is added in the amount of 0.1 to 10 mol parts in boron equivalent relative to 100 mol parts of magnesium hydroxide. If the addition amount is less than 0.1 mol part, energy costs increase because it becomes difficult for the particle to grow. If the addition amount exceeds 10 mol parts, productivity is poor because many coarse particles occur leading to a decreased yield ratio of desired products. The magnesium oxide particle having the desired particle diameter can be obtained by adjusting the addition amount of boric acid or a salt thereof and the reaction temperature. For small particle diameter, preferably, the addition amount of boric acid or a salt thereof is decreased and the reaction temperature is lowered. For large particle diameter, preferably, the addition amount of boric acid or a salt thereof is increased and the reaction temperature is raised.

The boric acid or a salt thereof is not particularly limited but includes, for example, boric acid, zinc borate 3.5 hydrate, ammonium borate octahydrate, potassium borate, calcium borate n hydrate, triethanolamine borate, sodium borate, magnesium borate n hydrate, lithium borate, ammonium tetraborate tetrahydrate, sodium tetraborate, sodium tetraborate decahydrate, potassium tetraborate tetrahydrate, manganese (II) tetraborate, lithium tetraborate anhydrous, lithium tetraborate n hydrate. The borate salt may be hydrate or anhydride. As the boric acid or a salt thereof, lithium tetraborate pentahydrate, sodium tetraborate decahydrate, potassium tetraborate tetrahydrate and ammonium tetraborate tetrahydrate are preferred, among them, sodium tetraborate decahydrate (borax) is more preferred.

When a borate salt is used as the boric acid or a salt thereof, boric acid and a metallic salt compound and/or metallic hydroxide may be added to magnesium hydroxide. The boric acid and an ammonium salt and/or ammonia aqueous solution may be used. That is, the magnesium oxide particle of the present disclosure can be obtained by adding boric acid to magnesium hydroxide in combination with salts such as sodium salts, sodium hydroxide, lithium salts, lithium hydroxide, potassium salts, potassium hydroxide, ammonium salts, ammonia aqueous solution, zinc salts, such amine salt compounds as triethanolamine salts and/or metallic hydroxides. In this case, boric acid and salts and/or metallic hydroxides may be added to magnesium hydroxide at the same time, each compound may be added separately in another stage (for example, the other is added during the baking) .

The magnesium oxide particle of the present disclosure is produced by mixing the magnesium hydroxide with the boric acid or a salt thereof in public methods and baking the obtained mixture. The mixing is not particularly limited but wet mixing with a dispersant is preferred. The baking is preferably a static baking from an industrial viewpoint but is not particularly limited.

The baking is performed at 1000 to 1800 °C. When the temperature is less than 1000 °C, it is not preferred because particle diameter may not increase sufficiently. When the temperature exceeds 1800 °C, it is not preferred because many coarse particles occur and yield may be decreased.

The magnesium oxide particles obtained by the above method have a sharp particle size distribution, but the magnesium oxide particles may be pulverized or classified using a sieve if sharper particle size distribution is required or in order to remove a few coarse particles. The method of pulverizing is not particularly limited but includes the method using an atomizer mill for example. The classification using a sieve is not particularly restricted but includes wet classification and dry classification.

The use of the magnesium oxide particle of the present disclosure is not particularly limited but the particles can be used as a heat-conducting filler, for example. This heat-conducting filler is one aspect of the present invention.

The heat-conducting filler of the present disclosure is usually used in fields such as heat-conducting resin compositions, heat-conducting greases and heat-conducting coating compositions. Many publications concerning such applications are known, the heat-conducting filler of the present disclosure is used in such known applications as heat-conducting resin compositions, heat-conducting greases and heat-conducting coating compositions.

When the magnesium oxide particle of the present disclosure is used as a heat-conducting filler, several magnesium oxide particles which are different in particle diameter and satisfy the requirements of the present disclosure may be mixed to use. More specifically, there may be mentioned magnesium oxide particles obtained by selecting magnesium oxide (a) and magnesium oxide (b) so that the particle diameter ratio ((a)/(b)) is remained within the range of 4≦ (a) / (b) ≦20, and mixing them so that the weight ratio ((a) : (b)) is remained within the range of 5:5 to 9:1, wherein the magnesium oxide particle (a) has primary particle diameter of 1 to 15 µm, measured by the method using the image taken with the Scanning Electron Microscope and the magnesium oxide particle (b) of 0.05 to 4 µm.

Three or more magnesium oxide particles may be used in combination. When three magnesium oxide particles are used in combination, there may be mentioned magnesium oxide particles obtained by selecting magnesium oxide (a), magnesium oxide (b), and magnesium oxide (c) so that the particle diameter ratios satisfy the two parameters, that is, 4≦ (a)/(b) ≦20 and 4 ≦ (b)/(c) ≦ 20, and mixing them so that the weight ratios satisfy the two parameters, that is, (a):((b)+(c))=5:5 to 9:1 and (b):(c)=5:5 to 9:1, wherein the magnesium oxide particle (a) has a primary particle diameter of 1 to 15 µm, measured by the method using the image taken with the Scanning Electron Microscope, the magnesium oxide particle (b) of 0.05 to 4 µm, and the magnesium oxide particle (c) of 0.01 to 1 µm.

As mentioned above, it is preferred that several magnesium oxide particles being different in particle diameter are selected and mixed for good filling ratio because the high filling ratio is expressed and good heat-conducting property is obtained.

When the magnesium oxide particle of the present disclosure is used as a heat-conducting filler, the particle may be used in combination with other components. The other components which may be used together, include other heat-conducting fillers than magnesium oxide such as metal oxides including zinc oxide, titanium oxide and aluminum oxide, aluminum nitride, boron nitride, silicon carbide, silicon nitride, titanium nitride, metallic silicon, and diamond, resins and surfactants.

When the magnesium oxide particle is used as a heat-conducting filler, the particles can be used in the form of a resin composition obtained by mixing with a resin. Such resin composition is one aspect of the present invention. In this case, the resin may be a thermoplastic resin or a thermosetting resin and includes epoxy resins, phenol resins, polyphenylene sulfide resins (PPS), polyester resins, polyamides, polyimides, polystyrenes, polyethylenes, polypropylenes, polyvinyl chlorides, polyvinylidene chlorides, fluorine resins, polymethyl methacrylate, ethylene/ethyl acrylate copolymer resin (EEA), polycarbonates, polyurethanes, polyacetals, polyphenylene ethers, polyether imides, acrylic nitrile-butadiene-styrene copolymer resin (ABS), liquid crystal resins (LCP), silicone resins, acrylic resins and other resins.

The resin composition of the present disclosure may be a resin composition for thermal molding obtained by kneading a thermoplastic resin and the magnesium oxide particle in melting condition: a resin composition obtained by kneading a thermosetting resin and the magnesium oxide particle following thermosetting: or other resin composition.

The addition amount of the magnesium oxide particle in the resin composition of the present disclosure can be arbitrarily determined according to the intended performance of the resin composition such as thermal conductivity, hardness and so on. In order to express the heat-conducting property of the magnesium oxide particle sufficiently, the addition amount of the particle is preferably 10 to 90 volume % relative to the total solid matter of the resin composition. The addition amount can be adjusted according to the needed level of heat-conducting property. For the application required better heat-conducting property, the addition amount is more preferably 30 volume % or more, and still more preferably 50 volume % or more.

In the resin composition of the present disclosure, the resin component may be selected in accordance to the use. For example, when the resin composition is placed between the heat source and the heat-conducting plate to make them stick together, resins having high adhesion property and low hardness such as silicone resins and acrylic resins can be selected.

When the resin composition of the present disclosure is a resin composition for thermal molding, the resin composition may be produced by the method comprising melt-kneading a thermoplastic resin and the magnesium oxide particle using a double-screw extruder, for example, to pelletize the resin composition and then, molding to the desired shape by the arbitrary molding method such as injection molding and so on.

When the resin composition of the present disclosure is the resin composition obtained by kneading a thermosetting resin and the magnesium oxide particle following thermosetting, it is preferably molded by pressure forming. Such method for producing the resin composition is not particularly limited, but includes the method molding the resin composition by transfer molding.

The applications of the resin composition of the present disclosure include heat-conducting parts of electronic components, thermal-conductive bulking agents, insulating bulking agents for temperature measurement. For example, the resin composition of the present disclosure can be used in order to transfer the heat from the exothermic electronic components, such as MPU, power transistor, transformer to the heat-conducting components such as heat-conducting fins and heat-conducting fan, and can be placed between the exothermic electronic components and heat-conducting components. This will allow good heat transfer between the exothermic electronic components and the heat-conducting components and will provide for a decrease in malfunction of the exothermic electronic components for a long term. Furthermore, the resin composition of the present disclosure can be preferably used for connecting a heat pipe and a heat sink, or connecting a module incorporated into various exothermic bodies and a heat sink.

When the magnesium oxide particle is used as a heat-conducting filler, the particle may be used as a heat-conducting grease obtained by mixing with a base oil which contains a mineral oil or a synthetic oil. This heat-conducting grease is one aspect of the present disclosure.

The addition amount of the magnesium oxide particle in the heat-conducting grease of the present disclosure may be decided according to the intended degree of thermal conductivity. In order to express the heat-conducting property of the magnesium oxide particle sufficiently, the addition amount of the particle is preferably 10 to 90 volume % relative to the total amount of the heat-conducting grease. The addition amount can be adjusted according to the needed level of heat-conducting property. For the application required better heat-conducting property, the addition amount is more preferably 30 volume % or more, and still more preferably 50 volume %.

As the base oil, one or more kinds of oil materials selected from the group consisting of mineral oils, synthesis oils, silicone oils, fluorinated hydrocarbon oils and the like can be used. The synthesis oil is preferably a hydrocarbon oil. As the synthesis oil, there may be mentioned α-olefins, diesters, polyol esters, trimellitic esters, polyphenyl ethers, alkylphenyl ethers and so on.

The heat-conducting grease of the present disclosure may contain a surfactant according to need. The surfactant is preferably a nonionic surfactant. By adding the nonionic surfactant, thermal conductivity can be improved and consistency of the heat-conducting grease can be controlled moderately.

As the nonionic surfactant, there may be mentioned polyoxyethylene alkyl ethers, polyoxyethylene alkyl phenyl ethers, polyoxyethylene alkyl naphthylene ethers, polyoxyethylene castor oil, polyoxyethylene hydrogenated castor oil, polyoxyethylene alkylamides, polyoxyethylene-polyoxypropylene glycols, polyoxyethylene-polyoxypropylene glycol ethylene diamines, decaglycerin fatty acid esters, polyoxyethylene fatty acid monoesters, polyoxyethylene fatty acid diesters, polyoxyethylene propylene glycol fatty acid esters, polyoxyethylene sorbitan fatty acid monoesters, polyoxyethylene sorbitan fatty acid triesters, ethylene glycol fatty acid monoesters, diethylene glycol fatty acid monoesters, propylene glycol fatty acid monoesters, glycerin fatty acid monoesters, pentaerythritol fatty acid monoesters, sorbitan fatty acid monoesters, sorbitan fatty acid sesquiesters, and sorbitan fatty acid triesters.

The effect of adding the nonionic surfactant depends on the kind of the heat-conducting filler, addition amount, and HLB which is the term showing the balance between hydrophilicity and lipophilicity (hydrophile-lipophile balance). Liquid surfactants with HLB of not more than 9 are preferred because good consistency is obtained at room temperature, in the practice of the present disclosure. Anionic surfactants, cationic surfactants and ampholytic surfactants may be used in the application such as high heat-conducting grease where the decrease of electrical insulation and electrical resistance are not emphasized.

The heat-conducting grease of the present disclosure can be produced by mixing the above mentioned components using a mixing apparatus such as a dow mixer (kneader), gate mixer, planetary mixer and so on.

The heat-conducting grease of the present disclosure may be applied to the exothermic body or the heat-conducting body. As the exothermic body, there may be mentioned, for example, exothermic electric components such as general electrical source; power transistor for electrical source, power module, thermistor, thermo couple, temperature sensor and other electrical apparatus: integrated circuit element such as LSI and CPU. As the heat-conducting body, there may be mentioned, for example, heat-conducting components such as heat spreader, heat sink; heat pipe, and heat-conducting plate. The application can be performed by the screen print method. The screen print method may be performed using metal mask or screen mesh. By applying the heat-conducting grease of the present disclosure between the exothermic body and the heat-conducting body, it is able to effectively remove heat from the exothermic body because heat transfer from the exothermic body to the heat-conducting body is performed efficiently.

When the magnesium oxide particle of the present disclosure is used as a heat-conducting filler, the filler can be used as a coating composition obtained by dispersing the filler in a resin solution or dispersion liquid. This heat-conducting coating composition is one aspect of the present disclosure. In this case, the resin contained in the composition may be a hardenable one or a nonhardenable one. The resin may include the exemplified resins which can be used in the resin composition mentioned above. The coating composition may be a solvent type one containing organic solvents or an aqueous type one containing a resin dissolved or dispersed in water.

The method for producing the coating composition is not particularly restricted but the coating composition can be produced by mixing and dispersing the necessary materials and solvents using a disper or beads mill.

The addition amount of magnesium oxide particle in the heat-conducting coating composition of the present disclosure may be decided according to the intended degree of thermal conductivity. In order to express the heat-conducting property of the magnesium oxide particle sufficiently, the addition amount of the particle is preferably 10 to 90 volume % relative to the total amount of the coating composition. The addition amount can be adjusted according to the needed level of heat-conducting property. For the application required better heat-conducting property, the addition amount is more preferably 30 volume % or more, and still more preferably 50 volume %.

The magnesium oxide particle of the present disclosure can be used in fields such as rubber accelerators, pigments for coating compositions and inks, and medicinal products in addition to the heat-conducting filler.

### [Example]

Hereinafter, the present disclosure will be described in more detail by way of examples, but the present disclosure is not limited to these examples.

Hereinafter, median size and particle size distribution of the obtained magnesium oxide particle were measured by laser diffraction particle size distribution analyzer (Microtrac MT 3300 EX manufactured by NIKKISO CO.,LTD).

### Measuring method

At first, particle diameter (SSA diameter) was determined from BET specific surface area and absolute specific gravity. Photographs of each magnesium oxide particle were taken at five locations by using Scanning Electron Microscope (JSM 840 F manufactured by JEOL Ltd.) at 2000-fold magnification when the SSA diameter was almost 10 μm, at 5000-fold magnification when the SSA diameter was almost 1 to 2 μm, and at 50000-fold magnification when the SSA diameter was almost 0.1 μm, respectively, to obtain five photographs with image parts of 9 cm narrow side and 12 cm long side. In each photograph, one line was drawn parallel to the narrow side from the middle point of the long side, another line parallel to the long side from the middle point of the narrow side. Two diagonal lines were drawn, and the short diameter and the long diameter of the particle overlapped with these four lines were measured by using vernier caliper. The average of these values was determined as the average primary particle diameter (SEM diameter) of each image.

### Example 1 Magnesium oxide particle -a

Magnesium oxide manufactured by Sakai Chemical Industry (product name MGZ-0) 1 kg was added to 1 L of ion-exchanged water containing 50 g of DISPEX A 40 (ammonium polyacrylate manufactured by Allied Colloid) and 1. 64 g of sodium tetraborate decahydrate (manufactured by Wako Pure Chemical Industries) to obtain a dispersion slurry of magnesium hydroxide. This addition amount of sodium tetraborate decahydrate was 0.1 mol part in boron equivalent. The obtained slurry was spray dried to obtain magnesium hydroxide in which sodium tetraborate decahydrate was mixed uniformly. This magnesium hydroxide was charged into an alumina pot with a lid followed by atmospheric baking at 1100 °C for 10 hours. After desalting the baked magnesium oxide, magnesium oxide particle -a was obtained by pulverization. The primary particle diameter of magnesium oxide particle -a determined from the SEM photograph was 1.68 μm, median size measured from particle size distribution was 4.29μm, specific surface diameter determined from specific surface area was 1.65μm, and median size measured from particle size distribution/specific surface diameter determined from specific surface area was 2.60. D90 was 6.79 μm, D10 was 1.75 μm, and D90/D10 was 3.88.

### Example 2 Magnesium oxide particle -b

Magnesium oxide particle -b was obtained by following the same procedure as that of Example 1 except that the addition amount of sodium tetraborate decahydrate was changed to 8.20 g. The addition amount of sodium tetraborate decahydrate was 0.5 mol part in boron equivalent. The primary particle diameter of magnesium oxide particle -b measured from the SEM photograph was 2.06 μm, median size measured from particle size distribution was 3.91μm, specific surface diameter determined from specific surface area was 1.98μm, and median size measured from particle size distribution/specific surface diameter determined from specific surface area was 1.97. D90 was 6.22μm, D10 was 2.35μm, and D90/D10 was 2.65.

### Example 3 Magnesium oxide particle -c

Magnesium oxide particle -c was obtained by following the same procedure as that of Example 1 except that sodium tetraborate decahydrate was replaced with 5.57 g of lithium tetraborate pentahydrate. The addition amount of lithium tetraborate pentahydrate was 0.5 mol part in boron equivalent. The primary particle diameter of magnesium oxide particle -c measured from the SEM photograph was 2.11 μm, median size measured from particle size distribution was 4.28μm, specific surface diameter determined from specific surface area was 2.02μm, and median size measured from particle size distribution/specific surface diameter determined from specific surface area was 2.03. D90 was 6.75μm, D10 was 2.56μm, and D90/D10 was 2.64.

### Example 4 Magnesium oxide particle -d

Magnesium oxide particle -d was obtained by following the same procedure as that of Example 1 except that sodium tetraborate decahydrate was replaced with 6.57 g of potassium tetraborate tetrahydrate. The addition amount of potassium tetraborate tetrahydrate was 0.5 mol part in boron equivalent. The primary particle diameter of magnesium oxide particle -d measured from the SEM photograph was 2.16 μm, median size measured from particle size distribution was 4.34μm, specific surface diameter determined from specific surface area was 2.06μm, and median size measured from particle size distribution/specific surface diameter determined from specific surface area was 2.01. D90 was 6. 65μm, D10 was 2.48μm, and D90/D10 was 2.68.

### Example 5 Magnesium oxide particle -e

Magnesium oxide particle -e was obtained by following the same procedure as that of Example 1 except that sodium tetraborate decahydrate was replaced with 5.66 g of ammonium tetraborate tetrahydrate. The addition amount of ammonium tetraborate tetrahydrate was 0.5 mol part in boron equivalent. The primary particle diameter of magnesium oxide particle -e measured from the SEM photograph was 2.16 μm, median size measured from particle size distribution was 4.34μm, specific surface diameter determined from specific surface area was 2.06μm, and median size measured from particle size distribution/specific surface diameter determined from specific surface area was 2.01. D90 was 6. 65μm, D10 was 2.48μm, and D90/D10 was 2.68.

### Example 6 Magnesium oxide particle -f

Magnesium oxide particle -f was obtained by following the same procedure as that of Example 1 except that the addition amount of sodium tetraborate decahydrate was changed to 82.0 g o. The addition amount of sodium tetraborate decahydrate was 5 mol parts in boron equivalent. The primary particle diameter of magnesium oxide particle -f measured from the SEM photograph was 2.22 μm, median size measured from particle size distribution was 4.02μm, specific surface diameter determined from specific surface area was 2.31μm, and median size measured from particle size distribution/specific surface diameter determined from specific surface area was 1.74. D90 was 6. 53μm, D10 was 2.48μm, and D90/D10 was 2.63.

### Example 7 Magnesium oxide particle -g

Magnesium oxide particle -g was obtained by following the same procedure as that of Example 1 except that the addition amount of sodium tetraborate decahydrate was changed to 131.2g. The addition amount of sodium tetraborate decahydrate was 8 mol parts in boron equivalent. The primary particle diameter of magnesium oxide particle -g measured from the SEM photograph was 2.39 μm, median size measured from particle size distribution was 4.58μm, specific surface diameter determined from specific surface area was 2.46μm, and median size measured from particle size distribution/specific surface diameter determined from specific surface area was 1.86. D90 was 6.86μm, D10 was 2.56μm, and D90/D10 was 2.68.

### Comparative Example 8A Magnesium oxide particle -h

Magnesium oxide particle -h was obtained by following the same procedure as that of Example 1 except that the addition amount of sodium tetraborate decahydrate was changed to 16.4g and the baking temperature was changed to 1000 °C. The addition amount of sodium tetraborate decahydrate was 1 mol parts in boron equivalent. The primary particle diameter of magnesium oxide particle -h measured from the SEM photograph was 1.41 μm, median size measured from particle size distribution was 4.43μm, specific surface diameter determined from specific surface area was 1.50μm, and median size measured from particle size distribution/specific surface diameter determined from specific surface area was 2.95. D90 was 6. 62μm, D10 was 1.76μm, and D90/D10 was 3.76.

### Example 9 Magnesium oxide particle -i

Magnesium oxide particle -i was obtained by following the same procedure as that of Example 1 except that the addition amount of sodium tetraborate decahydrate was changed to 16.4g and the baking temperature was changed to 1200 °C. The addition amount of sodium tetraborate decahydrate was 1 mol parts in boron equivalent. The primary particle diameter of magnesium oxide particle -i measured from the SEM photograph was 3.14 μm, median size measured from particle size distribution was 6.58μm, specific surface diameter determined from specific surface area was 3.28μm, and median size measured from particle size distribution/specific surface diameter determined from specific surface area was 2.01. D90 was 8.12μm, D10 was 3.56μm, and D90/D10 was 2.28.

### Example 10 Magnesium oxide particle -j

Magnesium oxide particle -j was obtained by following the same procedure as that of Example 1 except that the addition amount of sodium tetraborate decahydrate was changed to 16.4g and the baking temperature was changed to 1400 °C. The addition amount of sodium tetraborate decahydrate was 1 mol parts in boron equivalent. The primary particle diameter of magnesium oxide particle -j measured from the SEM photograph was 8.61 μm, median size measured from particle size distribution was 19.2μm, specific surface diameter determined from specific surface area was 9.01μm, and median size measured from particle size distribution/specific surface diameter determined from specific surface area was 2.13. D90 was 25.3μm, D10 was 11.9μm, and D90/D10 was 2.12.

### Example 11 Magnesium oxide particle -k

Magnesium oxide particle -k was obtained by following the same procedure as that of Example 1 except that the addition amount of sodium tetraborate decahydrate was changed to 16.4g and the baking temperature was changed to 1600 °C. The addition amount of sodium tetraborate decahydrate was 1 mol parts in boron equivalent. The primary particle diameter of magnesium oxide particle -k measured from the SEM photograph was 12.1 μm, median size measured from particle size distribution was 23.5μm, specific surface diameter determined from specific surface area was 13.0μm, and median size measured from particle size distribution/specific surface diameter determined from specific surface area was 1.81. D90 was 29. 8μm, D10 was 18.2μm, and D90/D10 was 1.64.

### Example 12 Magnesium oxide particle -1

Magnesium oxide particle-b 100 g obtained in Example 2 was redispersed in 100 ml of methanol (manufactured by Wako Pure Chemical Industries), 0.02 g of acetic acid (manufactured by Wako Pure Chemical Industries) and 1 g of decyltrimethoxysilane (KBM-3103C manufactured by Shin-Etsu Chemical Co., Ltd) were added. The mixture was agitated with the addition of 1 g of pure water. After agitating for an hour, filtration, drying, and pulverization were performed to obtain magnesium oxide particle-l. The obtained magnesium oxide particle-l was placed in a thermo-hygrostat at the temperature of 85 °C and the humidity of 85 % and change in weight was observed but weight increase was not found after 500 hours.

### Comparative Example 1 Magnesium oxide particle -m

Magnesium oxide particle -m was obtained by following the same procedure as that of Example 1 except that the addition amount of sodium tetraborate decahydrate was changed to 0.82 g and the baking temperature was changed to 1200 °C. The addition amount of sodium tetraborate decahydrate was 0.05 mol part in boron equivalent. The primary particle diameter of magnesium oxide particle -m measured from the SEM photograph was 0.98 µm, median size measured from particle size distribution was 3.26µm, specific surface diameter determined from specific surface area was 1.05µm, and median size measured from particle size distribution/specific surface diameter determined from specific surface area was 3.10. D90 was 6.21µm, D10 was 1.38µm, and D90/D10 was 4.50.

### Comparative Example 2 Magnesium oxide particle -n

Magnesium oxide particle -n was obtained by following the same procedure as that of Example 1 except that sodium tetraborate decahydrate was not added and the baking temperature was changed to 1200 °C. The primary particle diameter of magnesium oxide particle -n measured from the SEM photograph was 0.76 µm, median size measured from particle size distribution was 3.02µm, specific surface diameter determined from specific surface area was 0.79µm, and median size measured from particle size distribution/specific surface diameter determined from specific surface area was 3.82. D90 was 5.88µm, D10 was 1.23µm, and D90/D10 was 4.78.

### Examples 13 to 19 and 21 to 24, Comparative Example 20

Resin molded articles were prepared by mixing EEA resin (Rexpearl A-1150 manufactured by Japan Polyethylene Corporation) and magnesium oxide particles of Examples 1 to 7 and 9 to 12, and Comparative Example 8A at 160 °C as shown in Table 1 and then pressure molding. These were molded to be molded articles with 50 mm × 2 mm (diameter × thickness). Thermal conductivity of the molded articles were measured. In addition, thermal conductivity was measured at 25 °C according to the method with heat flow meter.

### Example 25

Resin molded article was prepared by mixing EEA resin (Rexpearl A-1150 manufactured by Japan Polyethylene Corporation) and mixture of magnesium oxide particles of Comparative Example 8A and Example 11 at 160 °C as shown in Table 1 and then pressure molding. This was molded to be a molded article with 50 mm × 2 mm (diameter × thickness). Thermal conductivity of the molded article was measured. In addition, thermal conductivity was measured at 25 °C according to the method with heat flow meter.

### Example 26

Resin molded article was prepared by mixing EEA resin (Rexpearl A-1150 manufactured by Japan Polyethylene Corporation), mixture of magnesium oxide particles of Comparative Example 8A and Example 11, and magnesium oxide manufactured by Sakai Chemical Industry (SEM diameter 0.1µm) at 160 °C as shown in Table 1 and then pressure molding. This was molded to be a molded article with 50 mm × 2 mm (diameter × thickness). Thermal conductivity of the molded article was measured. In addition, thermal conductivity was measured at 25 °C according to the method with heat flow meter.

### Comparative Example 3

Thermal conductivity was measured by following the same procedure as that of Example 13 that magnesium oxide particle was not added and the result was shown in Table 1.

### Comparative Example 4 to 6

Thermal conductivity was measured by following the same procedure as that of Example 13 except that magnesium oxide particles were changed to alumina. The results were shown in Table 1. In addition, the numeric values in Table mean the average particle diameter of alumina.

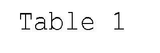

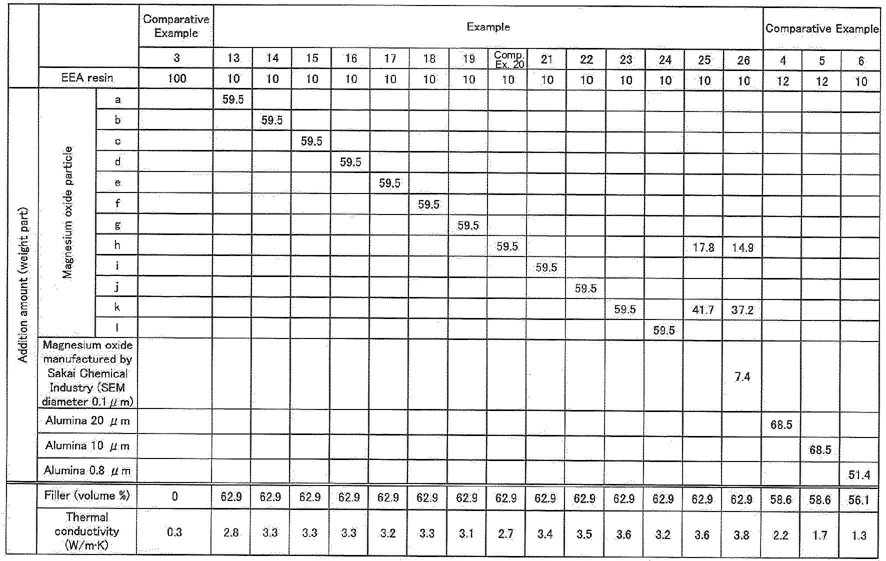

### Example 27

Epoxy resin (jER 828 manufactured by JAPAN EPOXY RESIN Co., Ltd), curing agent for epoxy resin (jER CURE ST 12 manufactured by JAPAN EPOXY RESIN Co., Ltd) and the magnesium oxide particle-j of Example 10 were mixed as shown in Table 2, and the obtained mixture was injected into a die with 50 mm × 2 mm (diameter × thickness) and heat treated at 80 °C for 3 hours to obtain a molded article. The thermal conductivity of the molded article was measured and the result was shown in Table 2.

### Comparative Example 7

Thermal conductivity was measured by following the same procedure as that of Example 27 except that the magnesium oxide particle-j was replaced with alumina 10 µm. The result was shown in Table 2.

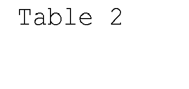

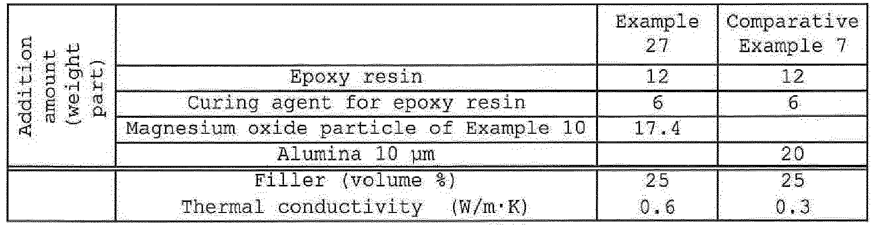

### Example 28

Silicone resin (KE-103 manufactured by Shin-Etsu Chemical Co., Ltd), curing agent for silicone resin (CAT-103 manufactured by Shin-Etsu Chemical Co., Ltd) and the magnesium oxide particle-j of Example 10 were mixed as shown in Table 3, and the obtained mixture was pressure molded at 150 °C for 30 minutes to obtain a resin composition. Then, the resin composition was further molded to obtain a molded article with 50 mm × 2 mm (diameter × thickness). Thermal conductivity of the molded article was measured and the result was shown in Table 3.

### Comparative Example 8

Thermal conductivity was measured by following the same procedure as that of Example 28 except that the magnesium oxide particle replaced with alumina 10 µm. The result was shown in Table 3.

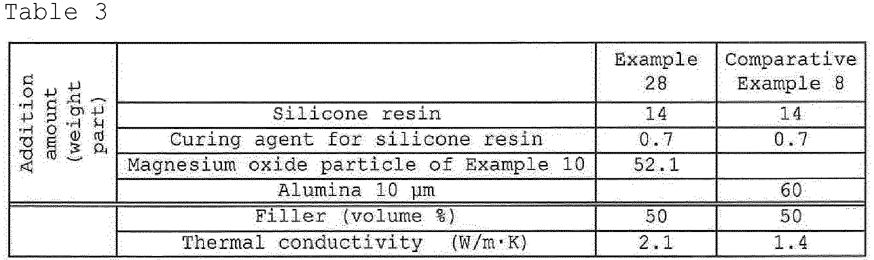

### Example 29

Silicone oil (KF-99 manufactured by Shin-Etsu Chemical Co., Ltd) and the magnesium oxide particle-j of Example 10 were mixed as shown in Table 4 to obtain a heat-conducting grease. Thermal conductivity of the heat-conducting grease was measured and the result was shown in Table 4.

### Comparative Example 9

Thermal conductivity was measured by following the same procedure as that of Example 29 except that the magnesium oxide particle-j was replaced with alumina 10 µm. The result was shown in Table 4.

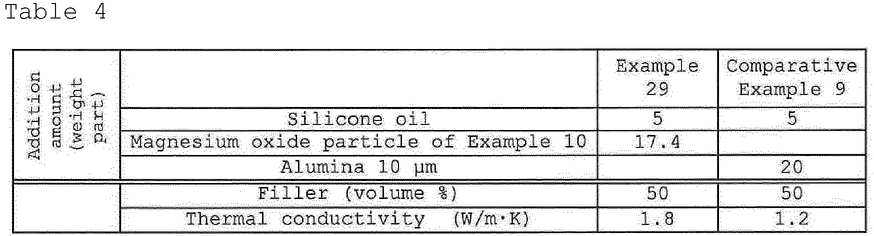

### Example 30

As shown in Table 5, epoxy resin (jER 828 manufactured by JAPAN EPOXY RESIN Co., Ltd), toluene and the magnesium oxide particle-j of Example 10 were dispersed by disper to obtain a heat-conducting coating composition. The thermal conductivity of the heat-conducting coating composition was measured and the result was shown in Table 5.

### Comparative Example 10

Thermal conductivity was measured by following the same procedure as that of Example 30 except that the magnesium oxide particle-j was replaced with alumina 10 µm. The result was shown in Table 5.

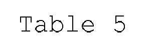

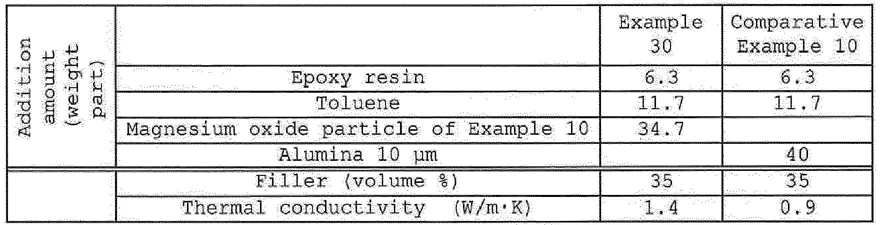

Judging from the results shown in Tables 1 to 5, it is apparent that the heat-conducting filler of the present disclosure has superior performances to the heat-conducting fillers which are widely used. It is apparent that the heat-conducting filler of the present disclosure is able to provide the heat-conducting property, no matter how great or small of addition amount of the heat-conducting filler.

### INDUSTRIAL APPLICABILITY

The magnesium oxide particle of the present disclosure is used suitably as the heat-conducting filler. In addition, the particle can be used for applications such as rubber accelerators, pigments for coating compositions and inks, and medicinal products.

## Claims

1. A magnesium oxide particle having (median size)/(specific surface diameter obtained from specific surface area) ratio of 2.8 or less, D90/D10 of 4 or less and a median size of 0.1 to 25 µm.

2. A method for producing a magnesium oxide particle comprising baking magnesium hydroxide in the presence of 0.1 to 10 mol parts of boric acid or a salt thereof in boron equivalent relative to 100 mol parts of said magnesium hydroxide at 1000 to 1800 °C to obtain the magnesium oxide particle according to Claim 1.

3. The method for producing a magnesium oxide particle according to Claim 2, wherein the boric acid or a salt thereof is at least one compound selected from the group consisting of lithium tetraborate pentahydrate, sodium tetraborate decahydrate, potassium tetraborate tetrahydrate, and ammonium tetraborate tetrahydrate.

4. A heat-conducting filler comprising the magnesium oxide particle according to Claim 1.

5. A resin composition comprising the magnesium oxide particle according to Claim 1.

6. A heat-conducting grease comprising the magnesium oxide particle according to Claim 1.

7. A heat-conducting coating composition comprising the magnesium oxide particle according to Claim 1.

## Patentansprüche

1. Magnesiumoxidpartikel mit einem (Mediangröße)/(spezifischer Oberflächendurchmesser, erhalten aus der spezifischen Oberfläche)-Verhältnis von 2,8 oder weniger, D90/D10 von 4 oder weniger und einer Mediangröße von 0,1 bis 25 µm.

2. Verfahren zur Herstellung von Magnesiumoxid-Partikeln, umfassend Backen von Magnesiumhydroxid in der Gegenwart von 0,1 bis 10 Mol Teilen Borsäure oder einem Salz davon, in Bor-Äquivalenten relativ zu 100 Mol Teilen von Magnesiumhydroxid bei 1000 bis 1800 °C, um Magnesiumoxidpartikel nach Anspruch 1 zu erhalten.

3. Verfahren zur Herstellung von Magnesiumoxidpartikeln nach Anspruch 2, wobei die Borsäure oder deren Salz wenigstens eine Verbindung, ausgewählt aus der Gruppe, bestehend aus Lithiumtetraborat-Pentahydrat, Natriumtetraborat-Decahydrat, Kaliumtetraborat-Tetrahydrat und Ammoniumtetraborat-Tetrahydrat ist.

4. Wärmeleitender Füllstoff, umfassend Magnesiumoxidpartikel nach Anspruch 1.

5. Harzzusammensetzung, umfassend Magnesiumoxidpartikel nach Anspruch 1.

6. Wärmeleitendes Schmiermittel, umfassend Magnesiumoxidpartikel nach Anspruch 1.

7. Wärmeleitende Beschichtung, umfassend Magnesiumoxidpartikel nach Anspruch 1.

## Revendications

1. Particule d'oxyde de magnésium ayant un rapport (taille médiane) / (diamètre de surface spécifique obtenu à partir de la surface spécifique) de 2,8 ou moins, D90/D10 de 4 ou moins et une taille médiane de 0,1 à 25 µm.

2. Procédé de production d'une particule d'oxyde de magnésium, comprenant la cuisson d'hydroxyde de magnésium en présence de 0,1 à 10 parties en moles d'acide borique ou d'un de ses sels dans du bore équivalent par rapport à 100 parties en moles dudit hydroxyde de magnésium à 1000 à 1800 °C pour obtenir la particule d'oxyde de magnésium selon la revendication 1.

3. Procédé de production d'une particule d'oxyde de magnésium selon la revendication 2, dans lequel l'acide borique ou un de ses sels est au moins un composé choisi dans le groupe constitué par le tétraborate de lithium pentahydrate, le tétraborate de sodium décahydrate, le tétraborate de potassium tétrahydrate et le tétraborate d'ammonium tétrahydrate.

4. Charge thermoconductrice, comprenant la particule d'oxyde de magnésium selon la revendication 1.

5. Composition de résine, comprenant la particule d'oxyde de magnésium selon la revendication 1.

6. Graisse thermoconductrice, comprenant la particule d'oxyde de magnésium selon la revendication 1.

7. Composition de revêtement thermoconductric,e comprenant la particule d'oxyde de magnésium selon la revendication 1.
